# EUROPEAN PATENT SPECIFICATION

(11) **EP 0 357 084 B1**
(45) Date of publication and mention of the grant of the patent: **21.04.1993**
(21) Application number: 89116203.4
(22) Date of filing: 01.09.1989
(51) Int. Cl.: H04N 5/217, H04N 3/36, H04N 3/14

(54) **Apparatus for correcting dark signal of image sensor**
Apparat zur Korrektur des Dunkelsignals eines Bildsensors
Appareil pour la correction de signal d'obscurité d'un capteur d'images

(30) Priority: 02.09.1988 JP 219724/88
(43) Date of publication of application: 07.03.1990
(73) Proprietor: FUJI PHOTO FILM CO., LTD., Kanagawa 250-01 (JP)
(72) Inventor: Shimoyama, Yuji, Ashigara-Kamigun Kanagawa (JP)
(74) Representative: Grünecker, Kinkeldey, Stockmair & Schwanhäusser Anwaltssozietät

(56) References cited:
- GB-A- 2 155 730
- US-A- 4 499 547
- US-A- 4 630 121
- PATENT ABSTRACTS OF JAPAN, unexamined applications, E field, vol. 12, no. 60, February 23, 1988 THE PATENT OFFICE JAPANESE GOVERNMENT page 84 E 584

## Description

### BACKGROUND OF THE INVENTION

This invention relates to an apparatus for correcting a dark signal of an image sensor which corrects dark signals from an image sensor such as a linear sensor comprising a CCD (Charge Coupled Device), an MOS (Metal Oxide Semiconductor), etc. and outputs exact reading signals.

There has been disclosed, for instance, a dark signal correcting apparatus for an image sensor, in Japanese Patent Laid-open No.202673/1987. The conventional apparatus disclosed in the above publication samples the output signals from the image sensor in the dark in a condition that input light is cut off, converts them from analog to digital by an A/D converter, stores the data for each pixel in a memory, subtracts the stored data from the sampled data of the output signals from the image sensor when images are being read out, and outputs the result of subtraction as image data.

As the input range of the A/D converter which converts the output signals from the image sensor into digital values is adjusted to the maximum output of the image sensor (maximum exposure = white level), the signals outputted in the dark are extremely low in level. Therefore, the sampling is conducted for plural times before the A/D conversion, and the digital values are averaged to enhance the precision of the dark signal data. However, since the data width for the dark signal is fixed, the precision of subtractable values remains to be± 1/2 LSB (Least Significant Bit) at the most. Due to this matter, the shadowed portion in the images that are reproduced with the corrected signals might be formed with linear blurs.

### SUMMARY OF THE INVENTION

This invention was conceived to eliminate such inconveniences encountered in the prior art and aims at providing an apparatus for correcting dark signal of the image sensor which can improve correcting precision for the dark signal by a simple structure and yet without the necessity to increase the resolution of the A/D converter and prevent linear blurs in the shadowed portion of the reproduced images.

According to one aspect of this invention, for achieving the objects described above, there is provided an apparatus for correcting dark signal of image sensor which comprises: an A/D converter which converts output signals from the image sensor into digital values, an adder which adds the digital values in dark for each pixel, a memory which stores the data from the adder on the result of the addition, a random number generating means which generates a random number which is a mean of the stored data in the memory, and a subtracter which subtracts the random number from the digital values at a time of reading of the images and outputs image data.

The nature, principle and utility of the invention will become more apparent from the following detailed description when read in conjunction with the accompanying drawings.

### BRIEF DESCRIPTION OF THE DRAWINGS

In the accompanying drawings:
FIG.1 is a block diagram to show the principle of this invention, and
FIG.2 is a block diagram to show an embodiment of this invention;

### PREFERRED EMBODlMENT OF THE INVENTION

According to this invention, the outputs from an image sensor are sampled in the dark in a condition that input light is cut off for plural times and converted from analog signal to digital values. The mean of the digital values is obtained as a random number, which is subtracted from the image data for output. Thus, the errors would not be accumulated in the least significant bit, and linear blurs would not occur in the shadowed portion in the reproduced images.

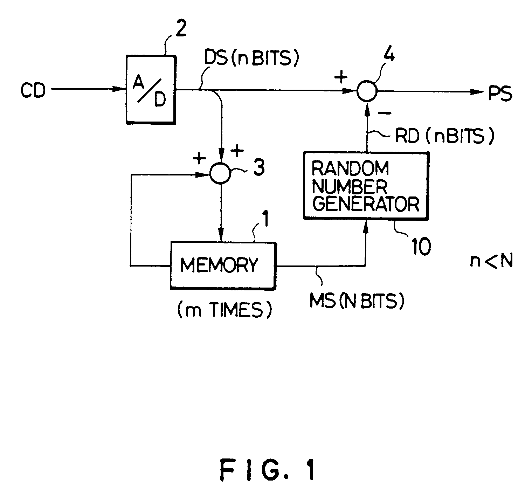

FIG. 1 shows the principle and construction of this invention wherein the outputs CD from an image sensor in the dark are sampled by an A/D converter 2 and the sampled values are converted into digital values DS of n bits. The digital values DS are added by an adder 3 for plural times (m times) consecutively, and data for each pixel are stored in a memory 1. The data MS of N bits (N > n) read out from the memory 1 are inputted to a random number generator 10. The data MS which have been stored in the memory 1 are then passed through the random number generator 10 which disperses the least significant bit LSB of the read out data PS at a propability shown by a data bit section which is less than the number of bits of the real data. The corrected data RD (n bits) outputted from the random number generator 10 is subtracted by a subtracter 4 from the digital values DS from the A/D converter 2 at the time of reading the images of the image sensor, and the result is outputted as the read-out and corrected data PS. Since the least significant bit of the corrected data RD from the random number generator 10 is outputted at random in either "1" or "0" due to generation of the random number, the corrected values of the least significant bit would not be fixed but averaged for the least significant bit of the data PS.

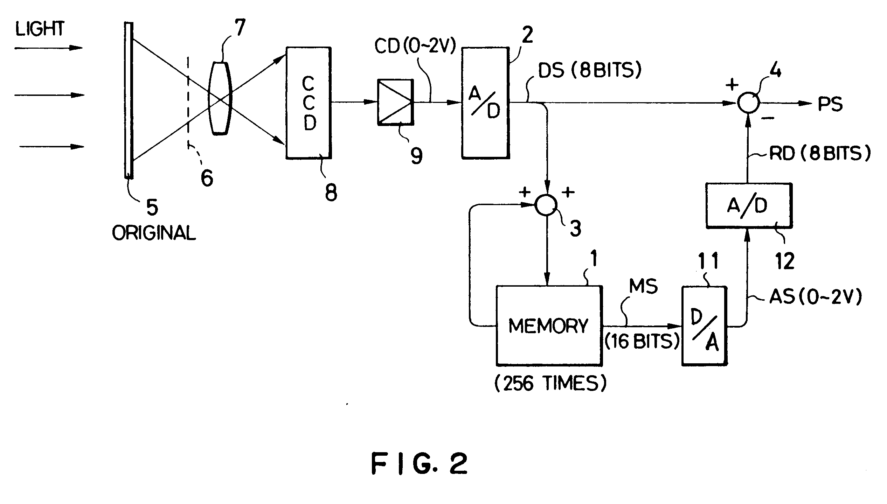

FIG.2 shows an embodiment of this invention wherein an original 5 such as a mounted film is illuminated with the light from a light source. and the light transmitted through the original 5 is inputted to an image sensor 8 such as a linear sensor comprising, for instance, a CCD, via a shutter 6 and a lens 7. The analog signal output from the image sensor 8 is amplified by an amplifier 9 into read-out signals CD (0 - 2 V) and inputted to an A/D (analog to digital) converter 2. The digital values DS (8 bits) converted by the A/D converter 2 are added for plural times by an adder 3, for instance, for 256 times, and the result of the addition is inputted and stored in a memory 1. The read-out digital data MS (16 bits) from the memory 1 are converted by a D/A converter 11 into analog signals AS of 0 - 2 V and inputted to an A/D converter 12 of 8 bits while the digital values RD (8 bits) which have been converted by the A/D converter 12 are inputted to a subtracter 4 as data for correction. The D/A converter 11 and the A/D converter 12 form a means to generate random numbers. The shutter 6 is provided between the lens 7 and the original 5 so that either the dark signal data or the image signals of the original 5 may be obtained by opening/closing the shutter 6.

When the shutter 6 is closed, the dark signal from the image sensor 8 are converted by the A/D converter 2 into digital values for each pixel, and are added at the adder 3 through the memory 1 by sampling for 256 times, and the result of addition is stored in the memory 1. In order to read out the images of the original 5, the shutter 6 is opened, the outputs from the image sensor 8 are converted from analog to digital values by the A/D converter 2, and the digital values DS are inputted to the subtracter 4. Simultaneously, the data MS stores in the memory 1 are read out from the memory 1 in response to pixel clocks, and the read-out data MS are converted into analog signals AS by the D/A converter 11. The analog signals AS are further converted into digital values by the A/D converter 12 of 8 bits, and the data RD for the correction are subtracted from the digital values DS of the images signals by the subtracter 4, to be outputted as the corrected and read-out data PS.

Although the means to generate random numbers is constructed with a D/A converter 11 and an A/D converter 12 in the embodiment shown in FlG.2, the entire construction may be in digital.

As is described in detail in the foregoing, the correcting apparatus according to this invention can realize dark signal correction for the image sensor at a high precision with a relatively simple structure and can prevent linear blurs which may otherwise occurring in the shadowed portion reproduced images.

## Claims

1. An apparatus for correcting dark signal of an image sensor which comprises: a first A/D converter (2) which converts output signals from the image sensor into digital values, an adder (3) which adds the digital values in dark for each pixel, a memory (1) which stores the data from the adder on the result of the addition, a random number generating means (10) which generates a random number so as to be a mean of the stored data in the memory, and a subtracter (4) which subtracts the random number from the digital values at a time of reading of the images and outputs image data.

2. An apparatus as claimed in Claim 1, wherein said image sensor comprises a charge coupled device.

3. An apparatus as claimed in Claim 2, wherein said image sensor is a linear sensor.

4. An apparatus as claimed in Claim 1, wherein said random number generating means comprises a D/A converter (11) which inputs output data of the memory, and a second A/D converter (12) which inputs an analog signal outputted from the D/A converter (11) and outputs the mean of the stored data.

5. An apparatus as claimed in Claim 4, wherein the digital values from the first A/D converter (2) are 8 bits, the addition by the adder (3) is repeated for 256 times and the output data of the memory (1) are 16 bits.

## Patentansprüche

1. Ein Apparat zum Korrigieren eines Dunkelsignals eines Bildsensors, wobei der Apparat umfaßt: einen ersten A/D-Konverter (2), welcher Ausgangssignale aus dem Bildsensor in Digitalwerte umwandelt, einen Addierer (3), welcher die Digitalwerte im Dunkeln für jedes Pixel addiert, einen Speicher (1), welcher die Daten aus dem Addierer im Ergebnis der Addition speichert, eine Zufallszahlerzeugungseinrichtung (10), welche eine Zufallszahl derart erzeugt, daß sie ein Mittel der gespeicherten Daten in dem Speicher ist, und eine Subtraktionseinrichtung (4), welche die Zufallszahl von den Digitalwerten zu einer Zeit während des Lesens des Bildes subtrahiert und Bilddaten ausgibt.

2. Ein Apparat nach Anspruch 1, wobei der Bildsensor eine CCD-Einrichtung umfaßt.

3. Ein Apparat nach Anspruch 2, wobei der Bildsensor ein Linearsensor ist.

4. Ein Apparat nach Anspruch 1, wobei die Zufallszahlerzeugungseinrichtung einen D/A-Konverter (11) umfaßt, welcher Ausgangsdaten des Speichers aufnimmt, einen zweiten A/D-Konverter (12), welcher ein aus dem D/A-Konverter (11) ausgegebenes Analogsignal aufnimmt und das Mittel der gespeicherten Daten ausgibt.

5. Ein Apparat nach Anspruch 4, wobei die Digitalwerte aus dem ersten A/D-Konverter (2) 8-Bit-Werte sind, die Addition durch den Addierer (3) 256mal wiederholt wird und die Ausgangsdaten des Speichers (1) 16-Bit-Daten sind.

## Revendications

1. Appareil pour corriger le signal d'obscurité d'un capteur d'image qui comprend: un premier convertisseur A/D (2) qui convertit les signaux de sortie issus du capteur d'image en valeurs numériques, un additionneur (3) qui additionne les valeurs numériques de l'obscurité pour chaque pixel, une mémoire (1) qui stocke les données de l'additionneur sur le résultat de l'addition, un moyen générant un nombre aléatoire (10) qui génère un nombre aléatoire pour qu'il soit une moyenne des données stockées dans la mémoire, et un soustracteur (4) qui soustrait le nombre aléatoire des valeurs numériques au moment de la lecture des images et restitue les données images.

2. Appareil selon la revendication 1, dans lequel ledit capteur d'image comprend un dispositif à transfert de charge.

3. Appareil selon la revendication 2 dans lequel ledit capteur d'image est un capteur linéaire.

4. Appareil selon la revendication 1 dans lequel ledit moyen pour générer des nombres aléatoires comprend un convertisseur D/A (11) qui convertit les données extraites de la mémoire, et un second convertisseur A/D (12) qui convertit un signal analogique extrait du convertisseur D/A (11) et produit la moyenne des données stockées.

5. Appareil selon la revendication 4, dans lequel les valeurs numériques du premier convertisseur A/D (2) ont 8 bits, l'addition par l'additionneur (3) est répétée 256 fois et les données extraites de la mémoire (1) ont 16 bits.
